# EUROPEAN PATENT APPLICATION

(11) **EP 4 354 558 A1**
(43) Date of publication of application: **17.04.2024**
(21) Application number: 22820175.2
(22) Date of filing: 06.06.2022
(51) Int. Cl.: H01M 8/04, C09K 5/10

(54) **COOLING LIQUID COMPOSITION FOR FUEL CELL**

(30) Priority: 11.06.2021 JP 2021098242
(71) Applicant: CCI Corporation, Seki-shi, Gifu 501-3923 (JP); CCI Holdings Inc., Seki-shi, Gifu 501-3923 (JP)
(72) Inventor: NAGAOKA, Shundai, Seki-shi, Gifu 501-3923 (JP); YAMAMOTO, Masahiro, Seki-shi, Gifu 501-3923 (JP)
(74) Representative: Grünecker Patent- und Rechtsanwälte PartG mbB
(86) International application number: PCT/JP2022/022722
(87) International publication number: WO 2022/259994

(57) **Abstract**

An object is to obtain a coolant composition for fuel cell offering insulation property as well as rustproofing effects in, for example, circuits where coolants are circulated, in order to cool, as a coolant composition for fuel cell, not only cells but also motors, inverters, and other heat-generating devices. As a solution, a coolant composition for fuel cell containing an ethylene oxide adduct of alkylamine and/or ethylene oxide adduct of alkyldiamine is provided.

## Description

### Technical Field

The present invention relates to a coolant composition for fuel cell.

### Background Art

Fuel cells are generally constituted as a stack, which is a structure comprising layers of many single cells representing generation units. The stack generates heat as electricity is generated, so the conventional practice has been to insert cooling plates after every several cells to cool the stack. And, coolant channels are formed inside the cooling plates, so the stack is cooled as the coolant flows through the channels.

As described above, the coolant for fuel cells circulates in the stack where electricity is generated, to cool the stack, which means that, if the electrical conductivity of the coolant is high, the electricity generated in the stack will flow to the coolant side, resulting in a loss of electricity and a drop in the generation capacity of the fuel cells. This is why the conventional fuel cell coolants use pure water having low conductivity, i.e., high electrical insulation property.

However, in the case of fuel cells for vehicles or residential cogeneration systems, for example, the coolant cools to the ambient temperature when the fuel cells are not operating. Especially when there is a possibility that these vehicles or systems will be used at sub-zero temperatures, the pure water may freeze and damage the cooling plates due to the coolant expanding in volume, or otherwise impair the battery performance of the fuel cells.

In light of these circumstances, as fuel cell coolants, coolant compositions for fuel cell are proposed that contain a base comprising a mixed solution of water and glycols for the purpose of achieving nonfreezing property, as well as amine-based alkaline additives to keep the coolant conductivity low.

Also, as described in Patent Literature 1, a coolant that contains a polyglycerin and/or polyvinyl alcohol and has been refined with an ion-exchange resin, is known.

Patent Literature 2 describes a coolant composition for fuel cell that contains one or multiple five-member heterocyclic compounds (azole derivatives) each having two or three heteroatoms selected from the group consisting of nitrogen and sulfur, and also has nitrogen atoms directly bonded with organic groups having 6 to 10 carbon atoms.

### Background Art Literature

### Patent Literature

Patent Literature 1: Japanese Patent No. 4136591
Patent Literature 2: Japanese Patent Laid-open No. 2020-512440

### Summary of the Invention

### Problems to Be Solved by the Invention

The conventional coolant compositions for fuel cell produce marginal amounts of ionic substances while the fuel cells are operating, as a result of an oxidation of the glycols and alcohols used in the coolants as their base. This could present a situation where the ionic substances in the coolants will increase after a long period of use, making the conductivities of the coolants no longer maintainable at low levels.

One possible solution to the occurrence of such a problem is to place an ion-exchange resin in the fuel-cell cooling system channels to remove the ionic substances in the coolant and thereby inhibit the conductivity of the coolant from rising.

In this case, however, the ion-exchange resin will be consumed for the removal of the ionic substances produced by oxidation of the base, and the ion-exchange capacity of the ion-exchange resin will drop quickly, potentially creating a problem of a significantly lower exchange life of the resin.

However, while the composition described in Patent Literature 1 above demonstrates excellent insulation property at the start of use, what happens to its insulation property after many hours of use is unknown, which makes it unclear whether or not the composition is suitable for practical use. Meanwhile, the composition described in Patent Literature 2 above also failed to achieve sufficient insulation property.

Accordingly, an object of the present invention is to obtain a coolant composition for fuel cell offering insulation property as well as rustproofing effects in, for example, circuits where coolants are circulated, in order to cool, as a coolant composition for fuel cell, not only cells but also motors, inverters, and other heat-generating devices.

### Means for Solving the Problems

To achieve the aforementioned object, the present invention gives a coolant composition for fuel cell as follows.
1. A coolant composition for fuel cell containing an ethylene oxide adduct of alkylamine and/or ethylene oxide adduct of alkyldiamine.
2. The coolant composition for fuel cell according to 1, wherein the ethylene oxide adduct of alkylamine is polyoxyethylene alkyl (C14-C18) amine, while the ethylene oxide adduct of alkyldiamine is N,N,N-tris(2-hydroxyethyl)-N-alkyl (C14-C18)-1,3 -diaminopropane.
3. The coolant composition for fuel cell according to 1 or 2, containing one or more types selected from water-soluble polymeric dyes, and thiodiglycols, and antioxidants, and defoaming agents.
4. The coolant composition for fuel cell according to any one of 1 to 3, whose base contains one or more types selected from water, glycols, alcohols, and glycol ethers.
5. The coolant composition for fuel cell according to any one of 1 to 4, whose conductivity is 100 µS/cm or lower.

### Effects of the Invention

According to the present invention, a coolant composition for fuel cell offering excellent insulation property and rustproofing property can be obtained.

### Mode for Carrying Out the Invention

The present invention is described specifically below.

The present invention is a coolant composition for fuel cell containing an ethylene oxide adduct of alkylamine and/or ethylene oxide adduct of alkyldiamine.

Additionally, the coolant composition for fuel cell proposed by the present invention has a conductivity, before use, of preferably 4.0 µS/cm or lower, or more preferably 3.0 µS/cm or lower, or yet more preferably 2.5 µS/cm or lower. Or, it may be 0.5 µS/cm or higher, or 1.0 µS/cm.

When it is 4.0 µS/cm or lower, the coolant composition for fuel cell can demonstrate high rustproofing property.

Furthermore, the conductivity, after 336 hours from the start of use, of the coolant composition for fuel cell proposed by the present invention is preferably 20.0 µS/cm or lower, or more preferably 15.0 µS/cm or lower, or yet more preferably 10.0 µS/cm or lower. Or, it may be 3.0 µS/cm or higher, or even 5.0 µS/cm or higher.

If it exceeds 20.0 µS/cm, metal members of the cooling system can present a noticeable degree of corrosion.

### (Ethylene Oxide Adduct of Alkylamine and Ethylene Oxide Adduct of Alkyldiamine)

Under the present invention, the ethylene oxide adduct of alkylamine is a compound expressed by Formula (1), while the ethylene oxide adduct of alkyldiamine is a compound expressed by Formula (2). Since these compounds are nonionic in nature, they are not adsorbed to ion-exchange resins.

Meanwhile, high rustproofing property can be demonstrated by containing these compounds because the dielectric constants are low. 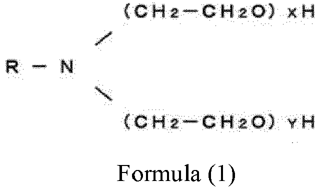
R: Branched- or straight-chain alkyl group with 14 to 18 carbon atoms
X and Y each independently represent 1 to 30. 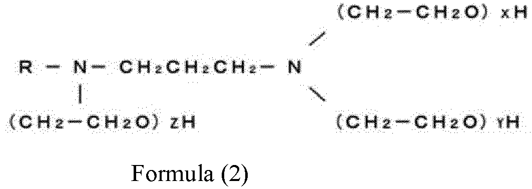
   R: Branched- or straight-chain alkyl group with 14 to 18 carbon atoms
   X, Y, and Z each independently represent 1 to 30.

In Formulas (1) and (2) above, X, Y, and also Z, are preferably 10 or smaller, or more preferably 5 or smaller, or yet more preferably 3 or smaller, or most preferably 1.

In the coolant composition for fuel cell proposed by the present invention, preferably the ethylene oxide adduct of alkylamine is polyoxyethylene alkyl (C14-C18) amine.

Preferably the ethylene oxide adduct of alkyldiamine is N,N,N-tris(2-hydroxyethyl)-N-alkyl (C14-C18)-1,3-diaminopropane.

In the coolant composition for fuel cell proposed by the present invention, the total content of ethylene oxide adduct of alkylamine and ethylene oxide adduct of alkyldiamine is preferably 0.05% by weight or higher, or more preferably 0.1% by weight or higher, or yet more preferably 0.13% by weight or higher, relative to all coolant composition for fuel cell.

Or, it is preferably 2.0% by weight or lower, or more preferably 1.0% by weight or lower, or yet more preferably 0.6% by weight or lower, or most preferably 0.3% by weight or lower.

It should be noted that the compounds expressed by Formulas (1) and (2) above do not encompass alkylamine salts or alkylamine oxides.

### (Base Material)

Desirably the base material contained in the coolant composition for fuel cell proposed by the present invention is low in conductivity and has nonfreezing property. To be specific, a base material containing a mixture comprising two or more types selected from water, glycols, alcohols, and glycol ethers is preferred.

### (Glycols Contained in Base Material)

The aforementioned glycols include one or more types selected from ethylene glycol, propylene glycol, 1,3-butylene glycol, hexylene glycol, diethylene glycol, triethylene glycol, glycerin, etc., of which ethylene glycol or propylene glycol is particularly desired.

### (Alcohols Contained in Base Material)

The aforementioned alcohols include one or more types selected from methanol, ethanol, propanol, butanol, pentanol, hexanol, heptanol, and octanol, for example.

### (Glycol Ethers Contained in Base Material)

The aforementioned glycol ethers include one or more types selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether, for example.

Of the aforementioned components of a base other than water, ethylene glycol and/or propylene glycol is/are preferred from the viewpoints of ease of handling, cost, and availability.

Antioxidants, anticorrosive agents, etc., as described below, may be added to the extent that the effects of the present invention are not impaired.

### (Antioxidants)

Or, the composition proposed by the present invention may contain at least one, or more, type(s) of antioxidant(s) to the extent that conductivity is not affected, in order to effectively inhibit corrosion of the metals used in the fuel cells. If antioxidants are contained, their content in the coolant composition for fuel cell is 10.0% by weight or lower, or more preferably 5.0% by weight or lower, or yet more preferably 3.0% by weight or lower. Even if they are contained by more than 10.0% by weight, the antioxidant property will not improve further.

The antioxidants include sulfur-containing alcohols and sulfur-containing phenols. Of the above, sulfur-containing alcohols are preferred. Sulfur-containing alcohols, when used in combination with the ethylene oxide adduct of alkylamine and/or ethylene oxide adduct of alkyldiamine, can demonstrate particularly excellent effects.

The sulfur-containing alcohols and sulfur-containing phenols include 2-(methylthio)ethanol, 2-(ethylthio)ethanol, 2-(n-propylthio)ethanol, 2-(isopropylthio)ethanol, 2-(n-butylthio)ethanol, 2-(isobutylthio)ethanol, 2-(phenylthio)ethanol, 2,2'-dithiodiethanol, 2-(2-aminoethylthio)ethanol, 3-(ethylthio)propanol, 4-(methylthio)butanol, 3-(methylthio)hexanol, 2-thiophenemethanol, 3-thiophenemethanol, 2-thiopheneethanol, 3-thiopheneethanol, 4-(methylthio)-6-(hydroxymethyl)-o-cresol, methionol, DL-methioninol, L-methioninol, thiodiglycol, 6-hydroxy-1,3-benzoxathiol-2-one, 4-(methylthio)benzyl alcohol, 4,4'-thiodiphenol, 3,6-dithia-1,8-octanediol, 3,7-dithia-1,9-nonanediol, etc.

### (Anticorrosive Agents)

Other anticorrosive agents include mixtures comprising one type, or two or more types, selected from phosphoric acids and/or salts thereof, aliphatic carboxylic acids and/or salts thereof, aromatic carboxylic acids and/or salts thereof, triazoles, thiazoles, silicates, nitrates, nitrites, borates, tungstates, molybdates, and amine salts.

The phosphoric acids and/or salts thereof include orthophosphoric acid, pyrophosphoric acid, hexametaphosphoric acid, tripolyphosphoric acid, etc., and alkaline metal salts thereof, preferably sodium salts and potassium salts.

The aliphatic carboxylic acids and/or salts thereof include pentanoic acid, hexanoic acid, heptanoic acid, octanoic acid, nonanoic acid, decanoic acid, 2-ethylhexanoic acid, adipic acid, suberic acid, azelaic acid, sebacic acid, undecanoic acid, dodecanedioic acid, etc., and alkaline metal salts thereof, preferably sodium salts and potassium salts.

The aromatic carboxylic acids and/or salts thereof include benzoic acid, toluic acid, para-tert-butylbenzoic acid, phthalic acid, para-methoxybenzoic acid, cinnamic acid, etc., and alkaline metal salts thereof, preferably sodium salts and potassium salts.

The triazoles include benzotriazole, methylbenzotriazole, cyclobenzotriazole, and 4-phenyl-1,2,3-triazole.

The thiazoles include mercaptobenzothiazole and alkaline metal salts thereof, preferably sodium salts and potassium salts.

The silicates include sodium salts and potassium salts of metasilicic acids, as well as an aqueous solution of sodium silicate expressed by Na2O/XSiO2 (X is 0.5 to 3.3) or so-called "water glass," while the nitrates include sodium nitrate and potassium nitrate, and the nitrites include sodium nitrite and potassium nitrite. The borates include sodium tetraborate and potassium tetraborate.

The molybdates include sodium molybdate, potassium molybdate, and ammonium molybdate, while the amine salts include monoethanolamine, diethanolamine, triethanolamine, monoisopropanolamine, diisopropanolamine, and triisopropanolamine.

### (Water-soluble Polymeric Dyes)

The water-soluble polymeric dyes that can be contained in the coolant composition for fuel cell proposed by the present invention are water-soluble polymeric dyes comprising water-soluble polymer chains and dyes bonded thereto. Among the water-soluble polymer chains, any one type, or polymer chains obtained by graft-polymerizing two or more types, among polyethylene glycol, polypropylene glycol, and other polyglycol chains, polyvinyl alcohol and other polyalcohols, polyacrylic acid and other polycarboxylic acids, cellulose and other sugars, as well as proteins, etc., is/are selected. Of these, polyethylene glycol chains and polypropylene glycol chains are preferred.

The dyes are selected from the group that consists of acridine, anthraquinone, azine, azo, benzodifuran, benzodifuranone, carotenoid, coumarin, cyanin, diazahemicyanin, diphenylmethane, formazan, hemicyanin, indigoid, methane, naphthalimide, naphthoquinone, nitro, nitroso, oxazine, phthalocyanine, pyrazole, stilbene, styryl, triarylmethane, triphenylmethane, xanthene, and mixtures thereof. Of these, preferably triarylmethane-based dyes and quinone-based dyes are adopted.

Among such polymeric dyes, those whose weight-average molecular weight is 1000 or greater may be used.

As these polymeric dyes, EVERTINT BLUE R-01, EVERTINT VIOLET R-01 (manufactured by Everlight Chemical Industrial Corp.), LIQUITINT BLUE MC (manufactured by Milliken Japan K.K.), and EXP BLUE B2035 (manufactured by Milliken Japan K.K.), all comprising water-soluble polymer chains and triarylmethane-based dyes or quinone-based dyes bonded thereto, may be adopted.

In the coolant composition for fuel cell proposed by the present invention, the content of water-soluble polymeric dyes is preferably 0.0005 to 0.2% by weight, or more preferably 0.001 to 0.1% by weight, or yet more preferably 0.003 to 0.02 parts by weight, relative to 100% by weight representing the base material of the coolant composition for fuel cell.

If it is under 0.0005% by weight, it will be difficult to visually confirm tinting, resulting in a poor visual recognizability of the coolant composition for fuel cell.

### (Defoaming Agents)

Defoaming agents may be contained in the coolant composition for fuel cell proposed by the present invention.

For such defoaming agents, dimethylsiloxane and other siloxane-based defoaming agents may be adopted.

The content of these defoaming agents is preferably 0.001 to 1.0% by weight, or more preferably 0.005 to 0.1% by weight, in the coolant composition for fuel cell.

It should also be noted that the present invention is not limited to the Examples below, and may be freely modified within the scope described in What Is Claimed Is and implemented as such.

### (Other Additives)

As other additives, standard alkaline substances, or preferably hydroxides of sodium, potassium, and other alkaline metal salts, may be used to adjust the pH of the coolant composition for fuel cell. Regarding the pH adjustment range, the pH is adjusted to a range of 6.5 to 9.0, or preferably 7.0 to 9.0. It should be noted that defoaming agents may be added to the coolant composition for fuel cell. Meanwhile, it does not contain cyclopentane.

### (Examples)

The effects of the present invention are indicated based on Examples and Comparative Examples.

The components, and the test results, of the compositions used in the Examples and Comparative Examples are shown in Table 1 below.

15 grams of an ion-exchange resin was added to 750 mL of each coolant shown in Table 1 and the mixture was agitated for 16 hours at room temperature, and the resulting liquid was used as a test liquid. Conductivity of the test liquid immediately after preparation was measured as its initial conductivity.

Next, metal test pieces made of SUS304, steel (SPCC-B), and aluminum (A3003) were heated for 336 hours at 88°C, after which decrease in mass of the test pieces were measured, along with post-test conductivity of the test liquid as its 336-hour conductivity. Table 1 shows the results of Examples 1 to 5 and Comparative Examples 1 to 4.

**[Table 1]**

| | | | Examples | | | | | Comparative Examples | | | |
|---|---|---|---|---|---|---|---|---|---|---|---|
| | | | 1 | 2 | 3 | 4 | 5 | 1 | 2 | 3 | 4 |
| Composition (parts by mass) | Base | Ethylene glycol | 100 | 100 | 100 | 100 | 100 | 100 | 100 | 100 | 100 |
| | | Ion-exchanged water | 93.3 | 93.3 | 93.3 | 93.3 | 93.3 | 93.3 | 93.3 | 93.3 | 93.3 |
| | Antioxidant | Thiodiglycol | 2 | 2 | - | 2 | 2 | - | 2 | 2 | 2 |
| | Dye | EVERTINT VIOLET R-01 | 0.001 | 0.001 | - | 0.001 | - | - | - | 0.001 | 0.001 |
| | Defoaming agent | Dimethylsiloxane | 0.01 | 0.01 | - | - | 0.01 | - | - | - | 0.01 |
| | Anticorrosive agents | Polyoxyethylene alkyl (C14-C18) amine | 0.3 | - | - | - | - | - | - | - | - |
| | | N,N'N'-tris(2-hydroxyethyl)-N-alkyl (C14-C18)-1,3-diaminopropane | - | 0.3 | 0.3 | 0.3 | 0.3 | - | - | - | - |
| Metal corrosivity | Decrease in mass of test piece (mg/cm²) | SUS304 | 0 | 0 | 0.01 | -0.01 | 0 | 0 | 0.01 | -0.01 | 0 |
| | | SPCC-B | -0.21 | -0.09 | -0.09 | -0.09 | -0.06 | -4.45 | -4.36 | -6.63 | -5.89 |
| | | A3003 | -0.01 | 0.02 | 0.01 | -0.05 | 0.05 | 0.02 | 0.04 | -0.04 | 0.01 |
| | Conductivity (µS/cm) | Initial | 1.5 | 2.4 | 2.3 | 2.3 | 2.3 | 0.2 | 0.3 | 0.3 | 0.4 |
| | | 336-hour | 5.9 | 4.1 | 14 | 5.9 | 4 | 14.2 | 13 | 34.4 | 32.2 |

The above results show that a low-conductivity coolant composition for fuel cell not adsorbed to the ion-exchange resin but demonstrating excellent effects in the prevention of corrosion of iron and aluminum, can be obtained by adding to the coolant an ethylene oxide adduct of alkylamine or ethylene oxide adduct of alkyldiamine as an anticorrosive agent.

## Claims

1. A coolant composition for fuel cell, containing an ethylene oxide adduct of alkylamine and/or ethylene oxide adduct of alkyldiamine.

2. The coolant composition for fuel cell according to claim 1, wherein the ethylene oxide adduct of alkylamine is polyoxyethylene alkyl (C14-C18) amine, and the ethylene oxide adduct of alkyldiamine is N,N,N-tris(2-hydroxyethyl)-N-alkyl (C14-C18)-1,3-diaminopropane.

3. The coolant composition for fuel cell according to claim 1 or 2, containing one or more types selected from water-soluble polymeric dyes, and thiodiglycols, and antioxidants, and defoaming agents.

4. The coolant composition for fuel cell according to any one of claims 1 to 3, whose base contains one or more types selected from water, glycols, alcohols, and glycol ethers.

5. The coolant composition for fuel cell according to any one of claims 1 to 4, whose conductivity is 100 µS/cm or lower.
